# EUROPEAN PATENT APPLICATION

(11) **EP 3 085 731 A1**
(43) Date of publication of application: **26.10.2016**
(21) Application number: 15305623.9
(22) Date of filing: 23.04.2015
(51) Int. Cl.: C08K 3/16, C08K 5/14, C09J 195/00, C08L 95/00

(54) **MODIFIED BITUMINOUS BINDER EMULSION**

(71) Applicant: COLAS, 92100 Boulogne-Billancourt (FR)
(72) Inventor: M. THACHANPARAMBATH KUTTAPPA, Subhaash, Navi Mumbai - 400 705 (IN)
(74) Representative: Jacobacci Coralis Harle

(57) **Abstract**

The invention relates to a process for the preparation of a bituminous binder emulsion for making layers and/or coatings for road construction and/or civil engineering, comprising mixing a dispersing aqueous phase and a bituminous binder comprising an initial bitumen in the presence of at least one emulsifying agent, and obtaining a bituminous binder emulsion comprising a final bitumen, wherein at least one oxidizing agent is mixed with the dispersing aqueous phase or the bituminous binder before or during the mixing step, or is added in the mixture after said mixing step has been initiated. The invention also relates to a composition for preparing a modified emulsion and its use for making tack coats having a trackless finish.

## Description

The present invention relates to a modified bituminous binder emulsion that can be used in all the applications of bitumen emulsions, in particular for making layers and/or coatings for road construction and/or civil engineering, a method for preparing the same and its use for making trackless tack coats.

Bitumen, residue from crude oil distillation, is a complex material basically composed of hydrocarbons along with some other molecules which contain small percentages of heteroatoms (sulfur, nitrogen and oxygen). It is a black viscoelastic solid at room temperature that turns into a viscous liquid as temperature increases. Bitumen presents unique adhesive and waterproofing properties that make this material particularly ideal to bind together aggregates.

Bitumen compounds can be classified by chromatographic techniques into four different fractions (usually referred to as "SARAs"): Saturates, Aromatics, Resins (which make up the maltenes) and Asphaltenes. Bitumen physicochemical and rheological properties strongly depend on both temperature and the relative proportion of the "SARAs" fractions.

In order to prepare an asphalt concrete mix, bitumen can be brought to a high enough temperature (usually above 150°C) to reach a sufficiently low viscosity to be directly mixed with dried and preheated aggregate material. They can also be used as warm asphalt mixes or foam asphalt mixes. However, bitumen can also be emulsified using appropriate surfactants. Mixing can then be carried out at ambient temperature. Aside from this advantage, the interest of emulsifying bitumen is that bitumen maintains its adhesive properties toward minerals in the presence of water, due to the use of surfactants. This is particularly interesting in road construction, as aggregates have been prepared in the open air and are therefore moist. Using bitumen in emulsion form eliminates the need to dry the aggregate, an essential step when working with molten bitumen at high temperature.

Bitumen is the only deformable component in asphalt mixtures and constitutes the continuous phase. In this sense, the viscoelastic properties of bitumen, over a wide range of temperatures and loadings, are of major importance for pavement performance.

However, when the rheological properties of the bituminous binder are not good enough, some road distresses may arise at both high and low in-service temperatures (namely, permanent deformation/rutting due to binder low stiffness, and thermal cracking, respectively) as a consequence of the combined action of traffic loads and weathering.

In order to mitigate their effects, improved modified binders have been developed by the paving industry over the last decades. Bitumen properties have been traditionally improved through the addition of various chemicals such as virgin polymers (styrene-butadiene polymers such as SBS and SBR, ethylene vinyl acetate polymers, polyethylenes, etc.), waste polymers (plastics from agriculture, ground tire rubber, etc.), adhesion promoters, polyphosphoric acid, sulfur, natural asphalt or by oxidation such as air blowing. However, in addition to being quite difficult to manufacture, polymer-modified binders also have high viscosity and require higher mix and paving temperatures.

Bitumen emulsions are used largely in road surfacing applications, such as surface dressing, cold mixtures and slurry seals. They are particularly used for producing tack coats (bond coats).

Tack coats are thin layers of asphalt product that are used to help the layers of asphalt laid down as part of the road building process to bond together with more efficiency. It can be used between pavement layers, such as between layers of asphaltic compositions or between layers of asphaltic materials and other paving or base materials. One goal of a tack coat is to bond subsequent hot, warm or cold mix layers in order to reach the strength of a single, monolithic layer. It is used in construction or for renovation of roads to achieve better strength. Inadequate bond strength at the interfaces can lead to slippage between the bituminous layers, which may cause shoving, cracking, and other premature pavement failures.

Traditional tack coats are often tracked away from the intended application area, generally by the tires of construction vehicles that are allowed to travel over the partially constructed structure, and deposited on other road surfaces. Tracking, i.e., the pick-up of bituminous materials, is unsightly, damages the fresh asphalt film and results in less tack available to achieve maximum bond strength, leading to slippage and delamination. This tracking can result in the existing pavement with little or no tack coat left in the wheel paths. In addition, tracking in intersections can create inconvenience to the public (this results in build up at intersections and covering of permanent pavement markings) and a liability due to a loss of friction.

The severity of the tracking phenomenon depends on the consistency of the residual bitumen contained in the emulsion and on the ambient temperature. Soft binders will have a higher tendency to stick to vehicle tires, while hot weather softens the binder and therefore increases tracking problems.

Various solutions have been implemented to overcome the drawbacks of traditional tack coats, including throwing gravel on the tack coat or the use a specific application device, namely a spray paver so as to apply the tack coat immediately before the subsequent coatings. This material is costly and its handling burdensome.

It is also possible to use an emulsion formulated with a hard binder, i.e., a binder composition providing a coating having a penetration value of less than about 40 1/10 mm and a softening point greater than about 60°C, such as disclosed in US 7,918,624.

Another solution is to use of a specific process that favors the bonding of the binder to the support, comprising a first step of applying a surface-active agent on a support, a second step of applying the bituminous emulsion preferably comprising a hard binder (such as a bitumen with a 35/50 penetration grade) on the surface-active agent on the support and a third step of applying a breaking agent on the bituminous emulsion to quickly form the bituminous tack coat. Such process is described in the patent US 5,769,567, in the name of the present Applicant. However, this solution requires installing additional material on the classical spreader and using supplementary chemicals. Further, a hard binder is necessary, which raises availability, manufacturing and cost issues. A hard binder requires higher temperatures than a soft binder, and the hard binder emulsion is generally manufactured above 100°C, which leads to the use of colloidal mills operating under pressure and heat exchangers.

Hard binders are generally produced in refinery plants, either by direct distillation or through oxidation. There are not a lot of refinery plants using the direct distillation process, while bitumen oxidation is a costly process that requires high temperatures or specific catalysts, which are usually harmful to environment. Thus, the supply of hard binders is sometimes difficult.

Oxidized bitumen can be produced by oxidation with oxygen or air. The degree of oxidation can range from very small, often referred to as air-rectification, or semi-blowing, which only slightly modifies the bitumen properties, through to "full" blowing, whereby the properties of the bitumen are significantly altered. Air blowing is a process by which compressed air is blown into a bitumen feedstock typically at 230-260°C and results in bitumen hardening. This process gives the bitumen more rubbery properties, raises the softening-point and viscosity of the bitumen but involves high temperatures and requires special equipment.

Thus, it would be desirable to provide a new method for obtaining a modified, hard bitumen emulsion, which would deliver bituminous binder based layers with improved rheological properties and performance at high temperatures, without using special bitumen. Said bituminous binder should have a good resistance to aging, satisfactory adhesive properties to surrounding layers, resistance against fatigue, mechanical resistance under most of traffic types and stiffness against rutting, a pleasant outward appearance, and an easy implementability, both as regards the production process and the application.

Another problem to be solved is the enhancement of the bituminous binder resistance to tire or caterpillar pick up when used as tack coat.

The present inventors have found an alternative to classic bitumen modification with polymers, natural asphalt or air blowing, involving the use of an oxidant for modifying bitumen emulsions and obtaining asphalt pavements with enhanced durability and trackless finish.

As used herein, a modified bituminous emulsion or engineered bituminous emulsion is intended to mean a bituminous emulsion that has been modified by the use of at least one oxidizing agent. Said emulsion can also comprise a bituminous binder that has been further modified by other chemical additives.

These objectives have been met by a process for the preparation of a bituminous binder emulsion for making layers and/or coatings for road construction and/or civil engineering, comprising:
a) mixing a dispersing aqueous phase and a bituminous binder comprising an initial bitumen in the presence of at least one emulsifying agent,
b) obtaining a bituminous binder emulsion comprising a final bitumen,
wherein at least one oxidizing agent is mixed with the dispersing aqueous phase or the bituminous binder before or during mixing step a), or is added in the mixture after mixing step a) has been initiated and before step b).

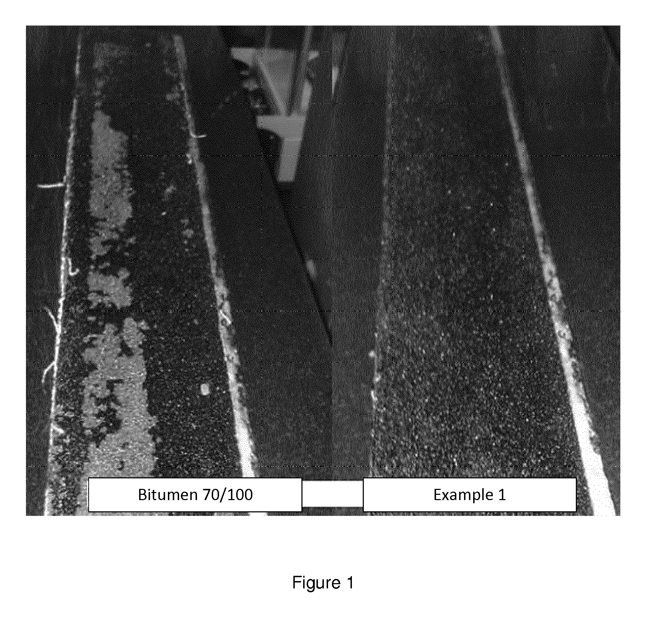

The foregoing and other objects, features and advantages of the present invention will become readily apparent to those skilled in the art from a reading of the detailed description hereafter when considered in conjunction with the accompanying drawings, wherein figure 1 represents tack coats prepared from a normal emulsion and an emulsion modified according to the present invention.

A bitumen emulsion is composed of a bituminous phase and an aqueous phase, one of said phases being dispersed under the form of discontinuous droplets in a continuous phase of the other. Bitumen emulsions employed in the road industry are generally direct, which means that the dispersed phase is the bituminous phase.

Emulsions of bituminous binder are conventionally prepared by mixing a dispersed phase and a dispersing aqueous phase in a suitable mixer, which generally produces a shear of phases present during mixing, or by phase inversion. The dispersed phase can comprise either pure bitumen or bitumen mixed with a flux, a fluidifying agent and/or additives such as polymers. The dispersing aqueous phase comprises, in particular, water and one or more emulsifiers, in particular surfactants.

The mixing under shear can be performed in the conventional mixers used in the art for the preparation of bitumen emulsions. This type of mixture can be prepared using colloidal mills, turbomixers, pumps or the like or alternatively using static mixers. When the mixing is carried out continuously, the aqueous phase and the liquid bituminous phase are introduced in proportions which advantageously allow direct production of the desired concentration.

The preparation of the emulsion is preferably a continuous process. As is well-known, the preparation of the dispersing aqueous phase can be continuous or discontinuous (i.e., batchwise). The temperature at which the bituminous phase is introduced into the mixer is sufficient to maintain the bituminous binder in the liquid state. A temperature above 100°C is generally necessary.

A person skilled in the art will take care to ensure that the emulsion does not start boiling when it leaves the mixer. To this end, it is convenient to adjust the respective temperatures of the aqueous phase and the bituminous phase which have to be introduced into the mixer and, if needed, to carry out the mixing under pressure and/or use heat exchangers. As a guide, a temperature between room temperature and 70°C is generally suitable for the initial aqueous phase, and emulsification generally occurs at a temperature lower than or equal to 100°C.

As used herein, a "bituminous binder" refers to a bituminous compound selected from pure or modified bitumens, or their combinations, which is able to harden and to adhere to the layer onto which it is deposited and/or bind granular materials together when granular materials are present. The bituminous binder of the invention is generally a mixture of natural hydrocarbon matters derived from the heavy end of a crude oil distillation or collected in natural oil reservoirs in a liquid or a solid form, and with densities generally ranging from 0.8 to 1.2. It may be obtained through any conventional method. Direct distillation bitumens, synthetic bitumens, in particular those that may be colored, de-asphalting or oxidized bitumens may be cited. Other examples of bituminous binders that may also be mentioned are acidic bitumens, in particular those wherein the acid is naphthenic acid or a derivative thereof.

Bitumens are classified into several types or grades, based on viscosity/hardness. Considered as suitable according to the present invention are for instance pure bitumens as defined by the NF EN-12591 standard, such as bitumens of classes 160/220, 100/150, 70/100, 50/70, 40/60, 35/50, 30/45 or 20/30, without any limitation. These standardized classes correspond to penetration ranges at 25°C determined through the EN-1426 penetration grade method and are expressed in 10⁻¹ mm.

The bituminous binder is generally present in an amount ranging from 10 to 80 % by weight, relative to the emulsion total weight, preferably from 40 to 80 %, more preferably from 40 to 70 %. The bitumen generally represents from 25 to 100 %, preferably from 50 to 100 %, more preferably from 65 to 90 % by weight as compared to the total weight of the bituminous phase (bituminous binder).

Although the bituminous emulsion according to the invention does preferably not comprise any polymer additives, it can be modified by incorporation of additives of any kind to control its properties, such as additives to promote the adhesion or "bonding" of the emulsion, i.e., the ability of the emulsion to come into contact with the bodies present, such as gravel and granulates, or to improve the mechanical resistance under high traffic or aggressive driving, viscosifiers, setting regulators, stabilizers, thickeners, salts, an acid, an alkali. Included are bitumens improved by addition of mineral or organic fillers, such as fibers, especially of glass, carbon or cellulose, cement, lime, silica or carbon black, by incorporation of polymers or copolymers (under an appropriate form such as a latex added to the aqueous phase), for example natural or synthetic elastomers of the rubber powder type (polybutadiene, styrene-butadiene rubber or SBR), copolymers of ethylene and vinyl acetate (EVA), statistical or block copolymers of styrene and conjugated dienes, for example SBS (styrene-butadiene-styrene) block copolymers, by incorporation of thermoplastics, such as for example, polyolefins (polyethylene, polypropylene), polyamides and polyesters, or by incorporation of thermosetting resins such as epoxy resins (bitumen / epoxy binders) or polyurethane resins, various other organic resins or recycled rubber crumbs. This list is obviously not exhaustive. It is of course also possible to use mixtures of different types of bitumens.

As an acid, phosphoric acid and its derivatives, salts and esters, hydrochloric acid and any acid or acid combination can be mentioned for example. As an alkali, organic and mineral alkalis can be mentioned such as for example polyamines, imidazolines, pyrrolidines, soda, lime or potash.

The bituminous binder emulsion used in the invention may include catalysts, in particular curing catalysts, such as metal salts and/or one or more coloring agents, such as inorganic pigments or organic dyes.

The bituminous binder may also be fluxed/fluidified with a flux or with a plasticizer so as to reduce its viscosity, for example a flux based on solvents derived from petroleum or from petrochemicals or carbochemicals (e.g., light petroleum solvents such as kerosene, oils from coal or from petroleum), or a flux of natural origin based on vegetable and/or animal fatty substances that are renewable and non-toxic. These bituminous binders may optionally contain 0.5 to 35% of fluxing agent, preferably from 0.5 to 10% by weight based on the binder total weight.

The emulsion according to the invention comprises at least one emulsifier, which is preferably a surfactant, more preferably an organic surfactant, in order to improve the binder-water affinity. The emulsifier contributes to stabilizing the emulsion, adjusting the average size of the droplets and their narrow distribution.

The surfactants that can be used according to the invention are those generally used in the art for the preparation of a bitumen emulsion and can be cationic, anionic, nonionic or amphoteric/zwitterionic. Examples of such compounds are fatty amine hydrochlorides, fatty acid salts, quaternary ammonium salts, polyethylene oxides or mixtures of such compounds. Examples of useful surfactants are (i) cationic surfactants, for example polyamines (especially aliphatic diamines such as N-alkyl polymethylene diamines), polyamidoamines or imidazolines, in their ionized forms, or quaternary ammonium salts, (ii) amphoteric surfactants such as cocoamidopropyl betaine (CAS: 70851-07-9), cocoamidopropyl hydroxysultaine (CAS: 70851-08-0) or sodium cocoamphoacetate (CAS: 68650-39 -5), (iii) nonionic surfactants such as alkyl aryl polyether alcohols, polyethoxylated nonylphenols (average ethylene oxide content of 4-12 mols per mol of nonyphenyl) benzyl ethers of octyl phenyl (for example TRITON CF-10 from Rohm and Haas Co.) and linear organic alcohols, and (iv) anionic surfactants, including carboxylates, olefin sulfonates (such as Bio-Terge AS-90 beads manufactured by Stepan Co., Calsoft AOS-40 manufactured by Pilot Chemical Co., and Witconate AOS manufactured by Witco), lignin sulfonates and their derivatives (such as Lignosite 458 & 823 manufactured by Georgia-Pacific, Temsperse products manufactured by Temfibre, and Indulin SAL manufactured by Westvaco), and alkylaryl sulfonates (such as Calsoft F-90 manufactured by Pilot Chemical Co., and Witconate LX manufactured by Witco).

The amount of emulsifying agent which needs to be used during the preparation of the emulsion will readily be determined by a person skilled in the art depending on the final use for which the bituminous binder emulsion is intended. The amount of emulsifying agent (preferably a surfactant) in the bitumen emulsion according to the invention preferably ranges from 0.05 to 5 % by weight, relative to the emulsion total weight, more preferably from 0.05 to 3 %, even more preferably from 0.1 to 2 % and better from 0.1 to 1 % by weight.

The emulsifying agent can be added to the dispersing aqueous phase, to the bituminous dispersed phase or partly to each of these two phases. As a general rule, all of the emulsifying agent is added to the dispersing aqueous phase.

However, it will be noted that, according to the invention, the emulsifier can be included directly in the actual structure of the bituminous binder. This is particularly the case for acidic bitumens of the naphthenic acid type that comprise functions with emulsifying activity in their structure. In this case, the presence of an additional emulsifier in one of the two phases is not necessary during the preparation of the emulsion. The addition of an organic or inorganic base to the initial aqueous phase is then sufficient.

The emulsions obtained from anionic surfactants are usually finer and more viscous than those comprising cationic surfactants, for the same binder content. Cationic emulsions are obtained with an emulsifying agent comprising one or more ionic groups having a positive electric charge. These emulsifiers generally involve working in an acidified environment at pH values that usually range from 1.5 to 3. Anionic emulsions are obtained with an emulsifying agent comprising one or more ionic group(s) having a negative electric charge. This generally involves working in an alkaline environment at pH values that usually range from 10 to 12.

The emulsion according to the invention comprises at least one oxidizing agent/oxidant present in an amount ranging from 0.5 to 20 % by weight, relative to the emulsion total weight, preferably from 1 to 15 % by weight, more preferably from 3 to 10 % by weight, even more preferably from 5 to 10 % by weight.

The added oxidizing agent is not dioxygen (O₂ gas) and is preferably not ozone. It is preferably not a gaseous oxidant. Various oxidizing agents can be used, including nitric acid and salts thereof, chromic or bromic acid and salts thereof, dichromates, osmium oxide, persalts such as perborates, percarbonates, persulfates and permanganates, hypochlorous acid, hypochlorite salts, 7,7,8,8-tetracyanoquinodimethane (TCNQ) derivatives having a strong electron attracting group, such as a cyano group and a nitro group, and peroxides. The preferred oxidizing agents are hypochlorous acid, hypochlorite salts such as sodium hypochlorite or calcium hypochlorite and peroxides, the most preferred ones being peroxides.

Examples of useful peroxides are, without limitation, peroxycarboxylic acids RCO₃H such as meta-chloroperoxybenzoic acid, benzoyl peroxide, cumene hydroperoxide, tert-butyl hydroperoxide, dicumyl peroxide, 2,5-bis(tert-butylperoxy)-2,5-dimethylhexane, bis(tert-butyldioxyisopropyl)benzene, 1,1-di(tert-butylperoxy)-3,3,5-trimethylcyclohexane, ketone peroxides, hydrogen peroxide. Any salt of hydroperoxide compounds can also be used, such as a salt of hydrogen peroxide, for example sodium peroxide. However, peroxides are preferably used under a non-salt form. Although the peroxide can be an organic peroxide, hydrogen peroxide and salts thereof are the most preferred peroxides. Among peroxides, one preferably uses hydroperoxides that are soluble in aqueous solutions and can be easily incorporated into the present emulsion. An advantage of peroxides, when used under a non-salt form, over oxidants used under a salt form is the fact that they do not generate salts side-products that would remain in the bituminous binder after the oxidation reaction took place.

The oxidizing agent is preferably introduced in the emulsion or the components of the emulsion (the aqueous phase or the bituminous phase) as a liquid solution, preferably an aqueous solution.

It has been observed that by usage of an oxidizing agent either in the dispersing phase or the bituminous phase at the time of manufacturing emulsion or post dosing into the already produced emulsion, the rheological and mechanical performance aspects of the bitumen residue obtained after application of the emulsion and curing were improved significantly.

The initial bitumen is converted to a final bitumen by action of the oxidizing agent. Without wishing to be bound by any theory, the inventors believe that the oxidant form oxygen bridges with hydrocarbon chains of bitumen, thus forming a tridimensional network by polymerization. The final bitumen is an oxidized bitumen that has been oxygen-enriched.

The oxidizing agent makes the emulsified bitumen harder. In other words, the penetration grade of the final bitumen is decreased as compared to the initial bitumen, which is an improvement in many applications such as the production of tack coats. Preferably, the penetration grade of the final bitumen is decreased by at least one grade as defined in the EN-12591 standard as compared to the initial bitumen, more preferably by at least two grades, even more preferably by at least three grades. For example, a 70/100 initial bitumen can be converted, i.e., upgraded, to a 40/60 bitumen by the process of the invention, and even to a 20/30 bitumen. Hardening can be controlled by the bitumen temperature, the reaction time with the oxidant and the amount of oxidant used, as a higher number of oxygen bridges increases the hardness of bitumen. In the present invention, hardening of bitumen can be initiated during the preparation of the emulsion (i.e., in the mixing apparatus), or after the emulsion has been prepared, depending on when the oxidizing agent is employed.

A common grading measure for bitumen is the penetration or "pen" value. The penetration value is based on penetration testing where the relative hardness of the asphalt composition is determined at a predetermined temperature, typically about 25°C. One test uses the methods described in ASTM D5, EN-12591 and/or AASHTO T49 (American Association of State Highway and Transportation Officials). This test measures the distance (penetration value) in tenths of a millimeter that a standard needle, under a standard loading, will penetrate a sample in a given time under known temperature conditions. The penetration test is used as a measure of consistency. Higher values of penetration indicate softer consistency.

Another common measure of asphalt compositions is the Ring and Ball Softening Point. The softening point test uses the methods described in ASTM D36 and/or AASHTO T53, and measures the temperature at which an asphalt composition becomes soft and flowable. It is indicative of the tendency of the material to flow at elevated temperatures encountered in service.

The modification of the emulsion with an oxidizing agent, whatever the time the modification occurs, advantageously modifies both the penetration and softening point values of the final bitumen as compared to the initial bitumen. As used herein, pen values and softening points are with reference to the above-identified ASTM and AASHTO methods.

The performance grading in the PG system of the so modified binder emulsion is found to be modified significantly as well, particularly at high temperatures, which is advantageous for the preparation of coating materials. This system defines climate-related optimal working conditions of bituminous binders through specifications for high and low temperature properties of asphalt concrete that correlate to road performance. The high temperature in the PG system, as defined in AASHTO standard M 320, represents the maximum pavement temperature at normal traffic loads. The modification of the emulsion with an oxidizing agent increases this upper performance grade of the bituminous binder, which can be correlated with an increase in rutting resistance.

The oxidizing agent can be mixed with the dispersing aqueous phase or the bituminous binder before or during the step of mixing the dispersing aqueous phase and the bituminous binder, i.e., before a bituminous binder emulsion has been formed. This addition can be total or partial. The oxidizing agent can also be added (totally or partially) to the mixture after the mixing step has been initiated, in particular after a bituminous binder emulsion has been obtained. The latter embodiment is called post dosing.

In one embodiment of the invention, the at least one oxidizing agent is added to a bituminous binder emulsion obtained after mixing step a), and before step b).

In another embodiment of the invention, the emulsion is prepared by a process comprising a) preparing a concentrated primary emulsion containing at least one emulsifying agent, a dispersing aqueous phase and a bituminous binder comprising an initial bitumen, and b) adding an aqueous dilution phase to said primary emulsion. Such technique is described in the European patent application EP 0994923, in the name of the Applicant. In this embodiment, the oxidizing agent is preferably added in the aqueous dilution phase, i.e., after the primary emulsion has been obtained, but can also be added in the mixing apparatus directly or with the components of the emulsion (the aqueous phase or the bituminous phase).

It is preferable to avoid any addition of the oxidizing agent to the bituminous phase, especially an addition a long time before the step of mixing with the aqueous phase, in order to avoid an excessive hardening of the bitumen. If the oxidizing agent is to be added to the bituminous phase, this is preferably done shortly before said mixing step so that the bitumen is not substantially modified before emulsification. In other words, when the at least one oxidizing agent is added in the bituminous binder before mixing step a), mixing step a) is preferably initiated before the initial bitumen penetration grade has been decreased by more than one grade as defined in the EN-12591 standard.

According to the preferred embodiment of the invention, the oxidizing agent is added (partially or totally, preferably totally) in the dispersing aqueous phase comprising the emulsifying agent, preferably before introduction thereof in the mixing apparatus, and then the dispersing aqueous phase is mixed with the bituminous binder. It is also possible to introduce the oxidizing agent in the mixing apparatus already comprising the bituminous binder and/or the dispersing aqueous phase, to introduce the oxidizing agent and the bituminous binder simultaneously in the mixing apparatus containing the aqueous phase, or to introduce the oxidizing agent, the bituminous binder and the aqueous phase simultaneously in the mixing apparatus.

In another embodiment of the invention, at least part of the one or more oxidizing agents is added in the dispersing aqueous phase comprising the emulsifying agent before mixing step a), and at least part of the one or more oxidizing agent is added into the already produced emulsion.

The emulsion of hardened bitumen of the invention can be stored before use. It will preferably be maintained at a temperature of between 20 and 70°C. Advantageously, the emulsion is stored at a temperature from 40 to 50°C by insulating the storage containers.

Finally, it will be noted that the process of the invention can be carried out on conventional plants designed for the manufacture of bitumen emulsions by means of minor modifications, namely installing a tank for the oxidizing agent and a transfer line comprising dosing units. An advantage of said process over the air blowing process is that modification of bitumen occurs much more rapidly. Further, the present invention does not require the use of special bitumen, as a hard bitumen is produced starting from traditional bitumen.

According to another of its aspects, the invention relates to a bituminous binder composition that can be prepared according to the process of the invention and that is the precursor of a bituminous binder emulsion, namely a bituminous binder composition (i.e., an emulsion) for making layers and/or coatings for road construction and/or civil engineering, comprising a dispersing aqueous phase, at least one emulsifying agent, a bituminous binder and at least one oxidizing agent.

The emulsions of the invention can be used in a variety of industrial applications, such as the construction and maintenance of road surfaces and the building industry. They can be used either alone or in the presence of aggregates, in particular for the preparation of surface dressings, tack coats, curing layers, bituminous coatings, emulsion base courses, bituminous slurries or cold-cast coatings, hot asphalt mixes, warm asphalt mixes, foam asphalt mixes, road markings, primer coatings for concrete structures or alternatively to ensure the leak tightness of foundations. An asphalt concrete/bituminous concrete/asphalt mix is defined as being an asphalt comprising mineral particles, which are bound together through a bituminous binder. It is preferably intended to the wearing course, binder course or base course of a pavement.

In one embodiment, the invention relates to a trackless tack coat formed from a bituminous binder emulsion obtained by the process of the invention.

A further object of the present invention is the use of an oxidizing agent for improving the trackless nature of a bituminous binder emulsion comprising a dispersing aqueous phase, at least one emulsifying agent and a bituminous binder.

The present modified emulsions allow for the preparation of tack coats with a trackless finish. "Trackless", "non-tracking" or "non-tacky" asphalt products are defined as bituminous binder layers that do not stick to the tires of cars, trucks or paving equipment tires or caterpillars and do not get "tracked" across adjacent areas. Tack coats or bond coats are well-known and described e.g. in the patent application GB 2452903, in the name of the Applicant.

The present bituminous emulsion has been advantageously modified so as to be able to dry extremely fast into a hard and driveable coating, often in less than 30 minutes, preferably less than 10 minutes. The trackless tack coats prepared with the emulsions of the present invention have a trackless surface, i.e. no loss of tack material to adjacent areas is observed. It presents superior bond strength between pavement layers (which greatly reduces shoving, cracking, and other failures associated with inadequate bond), allows, improved paving crew efficiency, reduces rutting. In addition, an improved appearance is obtained and less cleaning of driveways, parking lots, vehicles, and construction equipment are necessary.

Another advantage of the engineered bituminous emulsion according to the invention is that it provides coatings that better resist to permanent deformation, especially when used in cold mix applications.

As a result, modification of the bituminous emulsions by an oxidant, preferably peroxide or hypochlorite, results in an economical and sustainable paving practice, which leads to prolong asphalt pavements life-time even in harshly hot weather.

The examples below are given by way of illustration. They describe emulsions that are particularly suitable for the preparation of tack coats.

### Examples

### I. Materials and methods

Bitumen with a penetration grade of 70/100 has been used as base material for the emulsion. Hydrogen peroxide was used as an oxidizing agent. It is a colorless liquid that is slightly more viscous than water in its pure form. For safety reasons, it was used as a 50 % by weight aqueous solution. A mixture of Redicote^{®} E-4819 and Redicote^{®} E-11 was used as an emulsifier. Redicote^{®} E-4819 is a fatty amine derivative blend and was obtained from AkzoNobel. Redicote^{®} E-11 is a quaternary ammonium salt and was obtained from AkzoNobel.

Penetration of the bituminous materials was determined according to the ASTM D5 test method. Higher values of penetration indicate softer consistency.

The softening point of the bituminous materials was determined according to the ASTM D36 test method, using a Ring-and-Ball Apparatus.

The high temperature in the performance grading (PG) system of the bituminous materials was determined according to the method defined in AASHTO standard M 320. An increase in this upper performance grade of bituminous binder helps a road resist rutting.

The aging of the bituminous materials was studied using the rolling thin film oven test (RTFOT) according to the EN 12607-1 standard. In this test, a thin film of bitumen is continuously rotated around the inner surface of a glass jar at 163° C for 75 minutes with an injection of hot air into the jar every 3 to 4 seconds.

### II. Preparation of the emulsions and results

The following cationic emulsions were prepared in a colloidal mill by direct mixing of bitumen and the dispersing aqueous phase containing the emulsifier, hydrogen peroxide and acid (HCl) to adjust the pH. The emulsions were then stored for 3 hours in an oven at 160°C so as to obtain residues that were submitted to the tests.

| Example | 1 | 2 |
|---|---|---|
| Bitumen 70/100 (wt. %) | 60 | 60 |
| Redicote^{®} E-4819 / Redicote^{®} E-11 (wt. %) | 0.25 / 0.6 | 0.25 / 0.6 |
| Acid (wt. %) | 0.3 | 0.3 |
| H₂O₂ solution (wt. %) | 5 | 10 |
| Water (wt. %) | Rest | Rest |

The results of the tests that were performed before and after modification with hydrogen peroxide are shown in the table below.

| **Properties** | **Base bitumen 70/100** | **Emulsion residue example 1** | **Emulsion residue example 2** |
|---|---|---|---|
| Penetration at 25°C (1/10 mm) | 85 | 40 | 25 |
| Softening Point (°C) | 43 | 56 | 65 |

It can be seen that the ring & ball softening temperature increases while the penetration decreases with the amount of hydrogen peroxide added, which means that hydrogen peroxide causes hardening of the binder. The use of hydrogen peroxide allowed to convert the initial 70/100 bitumen into a 35/50 bitumen or a 20/30 bitumen meeting all specifications as per EN-12591.

The performance grading of the residues of the bitumen emulsions modified with hydrogen peroxide were also evaluated, as well as base bitumen. The results are as follows.

| **Base bitumen 70/100** | | |
|---|---|---|
| **Temperature °C** | G*/sin delta (Rutting parameter) | Specification |
| **46** | 8.3 kPa | Minimum 1 kPa for 25 mm plate, 1 mm gap at 10 rad/sec |
| **52** | 3.6 kPa | |
| **58** | **1.67 kPa** | |
| **64** | 0.7 kPa | |

| **After aging (RTFOT test)** | | |
|---|---|---|
| **58** | 6.75 kPa | Minimum 2.2 kPa for 25 mm plate, 1 mm gap at 10 rad/sec |

| **Example 1** | | |
|---|---|---|
| **Temperature °C** | G*/sin delta (Rutting parameter) | Specification |
| **58** | 9.2 kPa | Minimum 1 kPa for 25 mm plate, 1 mm gap at 10 rad/sec |
| **64** | 4.5 kPa | |
| **70** | **1.9 kPa** | |
| **73** | 0.9 kPa | |

| **After aging (RTFOT test)** | | |
|---|---|---|
| **70** | 5.5 kPa | Minimum 2.2 kPa for 25 mm plate, 1 mm gap at 10 rad/sec |

| **Example 2** | | |
|---|---|---|
| **Temperature °C** | G*/sin delta (Rutting parameter) | Specification |
| **64** | 15.7 kPa | Minimum 1 kPa for 25 mm plate, 1 mm gap at 10 rad/sec |
| **70** | 11.22 kPa | |
| **76** | 5.15 kPa | |
| **82** | 2.06 kPa | |
| **83** | **1.46 kPa** | |

| **After aging (RTFOT test)** | | |
|---|---|---|
| **82** | 4.4 kPa | Minimum 2.2 kPa for 25 mm plate, 1 mm gap at 10 rad/sec |

The temperature at which G*/sin delta less than 1.0 kPa was identified was 61.7°C (Fail temperature) for base bitumen. Hence, the high temperature in the PG system for base bitumen was 58°C. The temperature at which G*/sin delta less than 1.0 kPa was identified was 72°C (Fail temperature) for example 1. Hence, the high temperature in the PG system for example 1 was 70°C. The temperature at which G*/sin delta less than 1.0 kPa was identified was 83.2°C (Fail temperature) for example 2. Hence, the high temperature in the PG system for example 2 was 82°C.

It can be seen from the above tables that increasing the amount of hydrogen peroxide added to the bitumen emulsion resulted in improving the high temperature PG grade of the emulsion residue, which means a better resistance to rutting.

Tack coats were also prepared from the emulsions of example 1 and from unmodified base bitumen 70/100 to evaluate the trackless nature of said layers.

To replicate the field conditions with consistency, a tough sand paper of uniform consistency was identified. The sand as well as consistent granularity of sand enabled uniform evaluation. A sand paper roll of 2" width was cut into standard lengths, and a measured quantity of emulsions was applied on the sand paper. The treated sand papers were dried for 15 minutes at a temp of 40°C and humidity of 50% in a humidity chamber. The so conditioned sand papers were fixed onto a loaded wheel tester comprising a roller and 25 cycles were repeated for both specimens treated with base bitumen or a hydrogen peroxide-added emulsion (example 1).

As can be seen on figure 1, it was observed that the roller has picked up bitumen from the specimen obtained from base bitumen 70/100 (not treated with peroxide) (photo on the left), whereas no bitumen pick up observed from specimens treated with hydrogen peroxide added emulsion even after 1000 passes (example 1, photo on the right). This clearly establishes that emulsions according to the invention allow for the preparation of tack coats with a trackless finish:

| | **Tack coat obtained from bitumen 70/100** | **Tack coat obtained from the emulsion of example 1** |
|---|---|---|
| Bitumen picked up after 25 cycles | Yes | No |
| Bitumen picked up after 1000 cycles | Yes | No |

## Claims

1. A process for the preparation of a bituminous binder emulsion for making layers and/or coatings for road construction and/or civil engineering, comprising:
a) mixing a dispersing aqueous phase and a bituminous binder comprising an initial bitumen in the presence of at least one emulsifying agent,
b) obtaining a bituminous binder emulsion comprising a final bitumen,
**characterized in that** at least one oxidizing agent is mixed with in the dispersing aqueous phase or the bituminous binder before or during mixing step a), or is added in the mixture after mixing step a) has been initiated and before step b).

2. A process according to claim 1, wherein the at least one oxidizing agent is a peroxide.

3. A process according to claim 2, wherein said peroxide is hydrogen peroxide or a salt thereof.

4. A process according to any one of the preceding claims, wherein the at least one oxidizing agent is added as an aqueous solution.

5. A process according to any one of the preceding claims, wherein the at least one oxidizing agent is added in the dispersing aqueous phase comprising said at least one emulsifying agent, and then the dispersing aqueous phase is mixed with the bituminous binder.

6. A process according to any one of claims 1 to 4, wherein the at least one oxidizing agent is added to a bituminous binder emulsion obtained after step a), and before step b).

7. A process according to any one of claims 1 to 4, wherein the at least one oxidizing agent is added in the bituminous binder before mixing step a), and mixing step a) is initiated before the initial bitumen penetration grade has been decreased by more than one grade as defined in the EN-12591 standard.

8. A process according to any one of the preceding claims, wherein the penetration grade of the final bitumen is decreased by at least one grade as defined in the EN-12591 standard as compared to the initial bitumen.

9. A process according to any one of the preceding claims, wherein the at least one oxidizing agent is present in an amount ranging from 0.5 to 20 % by weight, relative to the emulsion total weight.

10. A process according to any one of the preceding claims, wherein the bituminous binder is present in an amount ranging from 10 to 80 % by weight, relative to the emulsion total weight.

11. A process according to any one of the preceding claims, wherein the bituminous binder contains a bitumen that represents from 25 to 100 %, preferably from 65 to 90 % of the bituminous binder total weight.

12. A process according to any one of the preceding claims, wherein the emulsifying agent is present in an amount ranging from 0.05 to 5 % by weight, relative to the emulsion total weight.

13. A bituminous binder composition for making layers and/or coatings for road construction and/or civil engineering, comprising a dispersing aqueous phase, at least one emulsifying agent, a bituminous binder and at least one oxidizing agent.

14. A trackless tack coat formed from a bituminous binder emulsion obtained by the process of any one of claims 1 to 12.

15. The use of an oxidizing agent for improving the trackless nature of a bituminous binder emulsion comprising a dispersing aqueous phase, at least one emulsifying agent and a bituminous binder.
